# EUROPÄISCHE PATENTSCHRIFT

(11) **EP 0 934 893 B1**
(45) Veröffentlichungstag und Bekanntmachung des Hinweises auf die Patenterteilung: **23.05.2001**
(21) Anmeldenummer: 99100980.4
(22) Anmeldetag: 21.01.1999
(51) Int. Cl.: B65G 47/04, B65G 47/82, B29C 51/44

(54) **Vorrichtung zum Übergeben von Stapeln aus tiefgezogenen Behältern aus thermoplastischer Kunststoffolie**
Device for transferring stacks of deepdrawn containers made from thermoplastic foil
Dispositif pour le transfer des piles de conteneurs moules emboutis en film thermoplastique

(30) Priorität: 29.01.1998 DE 19803300
(43) Veröffentlichungstag der Anmeldung: 11.08.1999
(73) Patentinhaber: Illig, Adolf Maschinenbau GmbH & Co., 74081 Heilbronn (DE)
(72) Erfinder: Karbach, Helmut, 74078 Heilbronn-Frankenbach (DE)

(56) Entgegenhaltungen:
- DE-A- 4 225 062
- DE-A- 4 428 257
- DE-B- 2 316 467

## Beschreibung

Die Erfindung betrifft eine Vorrichtung zum Übergeben von Stapeln aus tiefgezogenen Behältern aus thermoplastischer Kunststoffolie auf ein Transportband nach der Gattung des Hauptanspruches.

Bei Maschinen mit formendem und stanzendem Werkzeug ist es aus der DE 44 28 257 A 1 bekannt, diese in einer Stapelstation aus der Folienbahn auszubrechen, zu stapeln und mit einer Vorrichtung mittels eines Schiebers auf ein umlaufendes Transportband zu übergeben. Dieses Transportband arbeitet intermittierend in der Weise, daß nach dem Ausschieben und einer anschließenden Querverschiebung der Stapel ein Vorschubschritt des Transportbandes über einen eigenen Antrieb erfolgt. Es ist dann wieder Platz für die nächste Reihe von Stapeln.

Während des Ausschiebens selbst steht das Transportband. Da dieses Transportband in der Regel aus Kunststoff bzw. Gummi besteht, ist die Reibung zwischen unterstem Behälter und Transportband relativ hoch. Es besteht die Gefahr, daß die Stapel umkippen oder sich die übereinander stehenden Behälter zueinander verschieben, so daß schiefe Stapel entstehen mit der Gefahr des Umkippens beim Transport. Je nach Behälterform könnten angepaßte Ausschiebeteile angefertigt und eingebaut werden, um alle Behälter exakt in senkrechter Lage zu halten. Dies ist nicht immer vorteilhaft bei der Umstellung der Vorrichtung auf eine andere Behälterform. Durch die Reibung zwischen unterstem Behälter und Transportband kann je nach Kunststoffpaarung, Luftfeuchtigkeit und anderen Parametern die Gefahr der elektrostatischen Aufladung von Transportband bzw. Behältern bestehen mit der Folge des Anhaftens von Schmutz und des Aneinanderhaftens von Behältern.

Die DE 42 25 062 C2 beschreibt günstige Bedingungen bei der Übergabe von Gegenständen, wenn die übergebende und die übernehmende Einheit bei der Übergabe synchrone Bewegungen aufweisen. Hierzu ist eine Vielzahl von Antrieben erforderlich.

Volmer, J.: Getriebetechnik Lehrbuch, VEB Verlag Berlin (1972) beschreibt einen sinusförmigen Antrieb.

Der Erfindung liegt die Aufgabe zugrunde, eine wirtschafltiche Vorrichtung zur Übergabe von vertikal stehenden Stapeln, insbesondere aus einer thermoplastischen Kunststoffolie ausgestanzten Kunststoffolie tiefgezogenen Behältern mit einem Schieber auf ein in Start-/Stoppbetrieb bewegtes Transportband so zu gestalten, daß sich auf dem Transportband gut geordnete Stapel ohne erwähnenswerte elektrostatische Aufladung befinden. Wartungskosten und Störungsanfälligkeit sollten gering sein.

Zur Lösung der Aufgabe dienen die Merkmale des Hauptanspruches. Durch das synchrone Antreiben des Transportbandes mit dem Antrieb des Schiebers während des Ausschiebens der Stapel aus der Stapelstation wird jegliche Reibung zwischen Behälterstapel und Transportband vermieden, so daß die genannten Nachteile nicht eintreten und die gewünschten Ziele erreicht werden.

Die Unteransprüche betreffen vorteilhafte Weiterbildungen der Vorrichtung Die Vorrichtung ist anhand der schematischen Zeichnung näher beschrieben. Es zeigt:
- Figur 1: eine Längsdarstellung der Vorrichtung

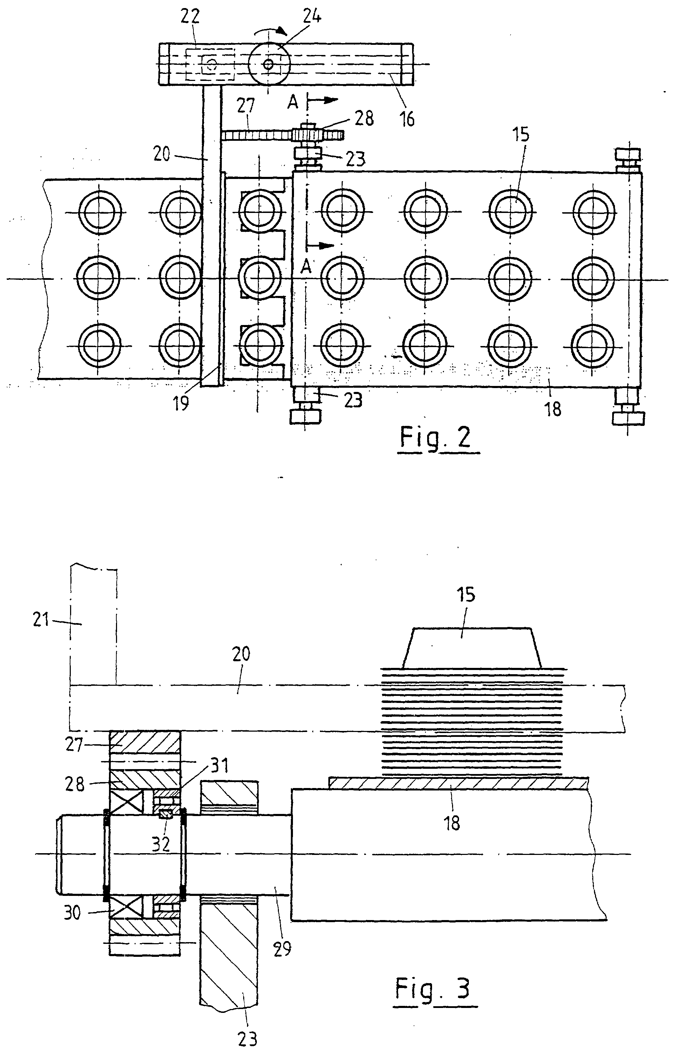

- Figur 2: eine Draufsicht auf die Stapelstation und das Transportband
- Figur 3: einen Schnitt entlang der Linie A - A in Figur 2.

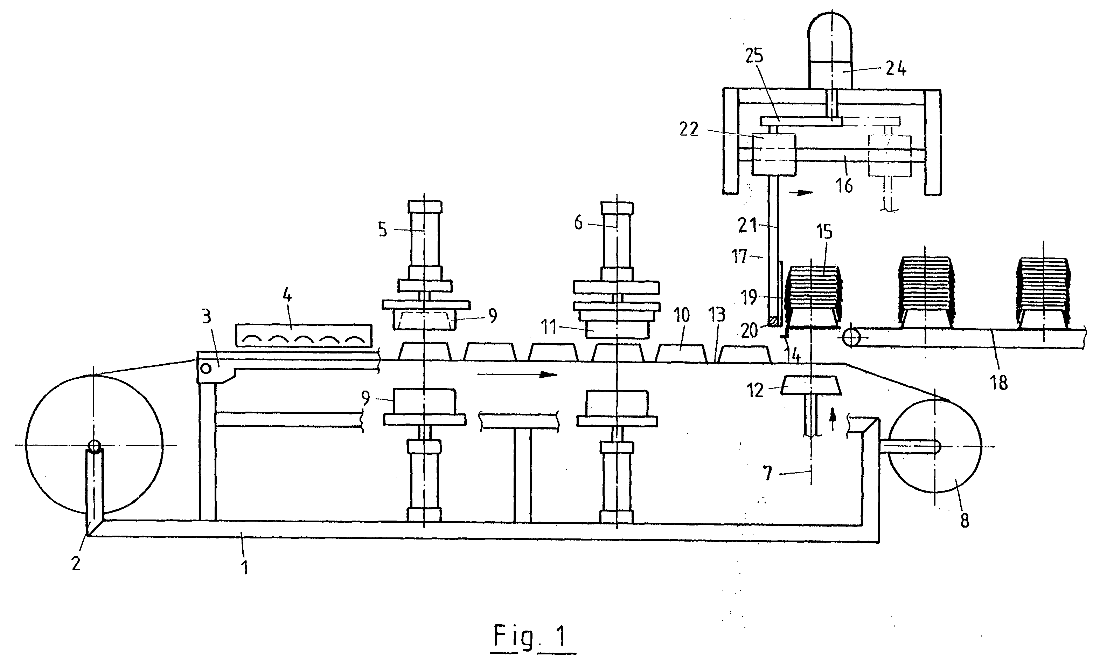

Figur 1 zeigt die Vorrichtung zum Tiefziehen und Ausstanzen von Behältern aus thermoplastischer Kunststoffolie. Sie besteht aus den Hauptteilen Gestell 1, Rollenaufnahme 2, Transporteinrichtung 3, Heizeinrichtung 4, Formstation 5, Stanzstation 6, Stapeleinrichtung 7 und Restgitteraufwicklung 8. In der Formstation 5 werden Formwerkzeuge 9 eingebaut, entsprechend der Form der herzustellenden Behälter 10. In der Stanzstation 6 kommen in der Regel Bandstahlschnitte 11 zum Einsatz. Sie stanzen die Behälter 10 ringsum aus, lassen aber kleine Verbindungsstege stehen, so daß die Behälter 10 im Restfoliengitter hängend zur Stapeleinrichtung 7 transportiert werden können. Formstation 5 und Stanzstation 6 können in einer Station vereint sein, wenn kombiniert formende/stanzende Werkzeuge eingesetzt werden und die Station entsprechend ausgebildet ist. Auch ist es bekannt, Behälter in der Stanzstation bzw. im kombinierten Form-/Stanzstation ganz auszustanzen und im Folienrestgitter hängend der nachfolgenden Stapeleinrichtung 7 zuzuführen.

Die Stapeleinrichtung 7 besteht aus einem höhenverschiebbaren Stapelteller 12, der die Behälter 10 aus der Folienbahn 13 ausbricht bzw. aushebt und auf Rückhalteorgane 14 schiebt. Diese sind vorzugsweise gefedert ausgeführt, so daß die Behälter 10 einfach von unten eingeschoben werden können und dann sicher zurückgehalten werden und auf diesen aufliegen.

Zum Ausschieben der Behälterstapel 15 mit einer über die Maschinensteuerung vorgegebenen und veränderbaren Stückzahl ist ein an Führungen 16 horizontal verlagerbarer Schieber 17 vorgesehen. Dieser überführt die Behälterstapel 15 auf ein Transportband 18. Der Schieber 17 besteht aus einem Querholm 20, an dem Bleche 19 in Platten- oder Streifenform sitzen können, um das Halten der Stapel 15 zu unterstützen. Es hat sich aber gezeigt, daß in der Regel auf diese Bleche verzichtet werden kann, da der Querholm 20 die Behälterstapel 15 im unteren Bereich ausreichend sicher beim Transportieren hält. Dieser Querholm 20 ist mit einer Stange 21 verbunden, die ein Führungsstück 22 trägt. Mittels dieses Führungsstückes 22 kann der Schieber 17 horizontal an den am Gestell 26 gelagerten Führungen 16 verschoben werden. Als Antrieb ist ein Motor 24 vorgesehen, der über eine Kurbel 25, die am Führungsstück 22 angelenkt ist, die horizontale Verschiebung herbeiführt.

Am Querholm 20 ist eine Zahnstange 27 befestigt, die mit einem Zahnrad 28 kämmt. Dieses Zahnrad 28 sitzt auf der Umlenkwalze 29 für das umlaufende Transportband 18, und zwar zum einen gelagert über das Kugellager 30, zum anderen über den Freilauf 31 mit Paßfeder 32. Der Freilauf 31 ist so eingebaut, daß er beim Ausschieben der in der Stapelstation 7 stehenden Behälterstapel 15 die Umlenkwalze 29 verdreht und damit das Transportband 18 mit gleicher Geschwindigkeit synchron zum Schieber 17 bewegt. Es gibt also keine Reibung zwischen unterstem Behälter 10 und Transportband 18. Beim Rücklauf des Schiebers 17 läuft der Freilauf 31 leer, das heißt die Umlenkwalze 29 bleibt stehen. Gelagert ist die Umlenkwalze 29 in ortsfesten Lagern 23.

Die gesamte Stapeleinrichtung 7 ist in Vorschubrichtung der Folienbahn 13 verschiebbar, um sie in richtige Position zu den Behältern 10 bringen zu können. Das Transportband 18 ist als Ganzes mit der Stapeleinrichtung 7 verbunden, so daß die gesamte Einheit gemeinsam verschoben werden kann und damit der Abstand zwischen Stapeleinrichtung 7 und Transportband 18 konstant bleibt.

Der Antrieb des Schiebers 17 über Motor 24 und Kurbel 25 hat den Vorteil, daß ein sinusförmiger Bewegungsablauf von Schieber 17 und Transportband 18 gegeben ist, so daß die Behälterstapel 15, die schon auf dem Transportband 18 stehen, nicht ruckartig verschoben werden. Es besteht also keine Kippgefahr.

Andere Antriebe des Schiebers 17 könnten über pneumatische Schwenk- oder Linearantriebe erfolgen, auch in Verbindung mit Gewinde-/Kugelrollspindeln. Die Kupplung zwischen Schieber 17 und Umlenkwalze 29 wären auch durchführbar in Form von hydraulischen, pneumatischen oder elektromagnetischen Kupplungen anstelle des Freilaufs 31. Solche Lösungen sind aber in der Regel teurer.

## Patentansprüche

1. Vorrichtung zum Übergeben von vertikal stehenden Stapeln (15) aus, insbesondere aus einer thermoplastischen Kunststoffolie tiefgezogen und ausgestanzten Behältern (10), die von einer Stapeleinrichtung (7) auf ein Transportband (18) durch die Vorwärtsbewegung eines Schiebers (17) überführt werden, dessen Rückwärtsbewegung unabhängig von der des Transportbandes (18) ist, dadurch gekennzeichnet, daß Schieber (17) und Transportband (18) einen gemeinsamen Antrieb aufweisen, der während des Ausschiebens der Behälterstapel (15) über eine Kopplungseinrichtung gekoppelt sodaß sich Schieber (17) und Transportband (18) mit gleicher Geschwindigkeit bewegen und während der Rückwärtsbewegung des Schiebers (17) entkoppelt ist sodaß das Transportband (18) stehenbleibt.

2. Vorrichtung nach Anspruch 1 dadurch gekennzeichnet, daß die Vorschubbewegung von Schieber (17) und Transportband (18) sinusförmig verläuft.

3. Vorrichtung nach Anspruch 1 oder 2 dadurch gekennzeichnet, daß als Antrieb ein Motor (24) oder ein pneumatischer Schwenkantrieb dient, der über eine Kurbel (25) den Schieber (17) bewegt.

4. Vorrichtung nach Anspruch 1 oder 2 dadurch gekennzeichnet, daß als Antrieb ein linearer pneumatischer oder hydraulischer Antrieb dient, der den Schieber (17) antreibt.

5. Vorrichtung nach Anspruch 1 oder 2 dadurch gekennzeichnet, daß als Antrieb ein Motor oder Servomotor dient, der über eine Gewindespindel bzw. Kugelrollspindel den Schieber (17) antreibt.

6. Vorrichtung nach einem der Ansprüche 1 bis 5 dadurch gekennzeichnet, daß am Schieber (17) eine Zahnstange (27) befestigt ist, die mit der Kopplungseinrichtung in Wirkverbindung steht.

7. Vorrichtung nach einem der Ansprüche 1 bis 6 dadurch gekennzeichnet, daß als Kopplungseinrichtung ein Freilauf (31) dient.

8. Vorrichtung nach einem der Ansprüche 1 bis 6 dadurch gekennzeichnet, daß als Kopplungseinrichtung eine pneumatische, hydraulische oder elektromagnetische Kupplung dient.

9. Vorrichtung nach einem der Ansprüche 1 bis 8 dadurch gekennzeichnet, daß die Stapeleinrichtung (7) und die Führung (23) des Transportbandes (18) fest miteinander verbunden und gemeinsam miteinander zu verstellen sind.

## Claims

1. Device for transferring vertically standing stacks (15) of containers (10) which are, in particular, deep-drawn and punched out of a thermoplastic synthetic material foil and which are transported from stacking equipment (7) to a transport belt (18) by the forward movement of a pusher (17), the rearward movement of which is independent of that of the transport belt (18), characterised in that pusher (17) and transport belt (18) have a common drive, which during pushing-out of the container stack (15) is coupled by way of a coupling device so that pusher (17) and transport belt (18) move at the same speed and during the rearward movement of the pusher (17) is uncoupled so that the transport (18) remains stationary.

2. Device according to claim 1, characterised in that the advance movement of the pusher (17) and transport belt (18) runs sinusoidally.

3. Device according to claim 1 or 2, characterised in that a motor (24) or a pneumatic pivot drive, which moves the pusher (17) by way of a crank (25), serves as the drive.

4. Device according to claim 1 or 2, characterised in that a linear pneumatic or hydraulic drive, which drives the pusher (17), serves as the drive.

5. Device according to claim 1 or 2, characterised in that a motor or a servomotor, which drives the pusher (17) by way of threaded spindle or a ball roller spindle, serves as the drive.

6. Device according to one of claims 1 to 5, characterised in that a rack (27), which is in operative connection with the coupling device, is fastened to the pusher (17).

7. Device according to one of claims 1 to 6, characterised in that a freewheel (31) serves as the coupling device.

8. Device according to one of claims 1 to 6, characterised in that a pneumatic, hydraulic or electromagnetic clutch serves as coupling device.

9. Device according to one of claims 1 to 8, characterised in that the stacking device (7) and the guide (23) of the transport belt (18) are fixedly connected together and are to be adjusted together in common.

## Revendications

1. Dispositif pour transférer des piles verticales (15) formées de réceptacles (10) notamment emboutis et estampés dans une feuille de matière thermoplastique, ces réceptacles étant transférés d'une installation d'empilage (7) sur une bande transporteuse (18) par le mouvement d'avance d'un poussoir (17), dont le mouvement de retour est indépendant du mouvement de la bande transporteuse (18),
caractérisé en ce que
le poussoir (17) et la bande transporteuse (18) ont un moyen d'entraînement commun, couplé pendant l'éjection de la pile de réceptacles (15) par une installation de couplage pour que le poussoir (17) et la bande transporteuse (18) se déplacent à la même vitesse, et découplé pendant le mouvement de retour du poussoir (17) pour que la bande transporteuse (18) reste immobile.

2. Dispositif selon la revendication 1,
caractérisé en ce que
le mouvement d'avance du poussoir (17) et de la bande transporteuse (18) est sinusoïdal.

3. Dispositif selon l'une quelconque des revendications 1 ou 2,
caractérisé en ce que
le moyen d'entraînement est un moteur (24) ou un moyen d'entraînement pivotant pneumatique déplaçant le poussoir (17) par l'intermédiaire d'une manivelle (25).

4. Dispositif selon l'une quelconque des revendications 1 ou 2,
caractérisé en ce que
le moyen d'entraînement est un entraînement linéaire pneumatique ou hydraulique entraînant le poussoir (17).

5. Dispositif selon l'une quelconque des revendications 1 ou 2,
caractérisé en ce que
le moyen d'entraînement est un moteur ou un servomoteur entraînant le poussoir (17) par une broche filetée ou une vis à billes.

6. Dispositif selon l'une quelconque des revendications 1 à 5,
caractérisé par
une crémaillère (27) fixée au tiroir (17) et coopérant avec l'installation du couplage.

7. Dispositif selon l'une quelconque des revendications 1 à 6,
caractérisé en ce que
l'installation de couplage est constituée par une roue libre (31).

8. Dispositif selon l'une quelconque des revendications 1 à 6,
caractérisé en ce que
l'installation de couplage est un embrayage pneumatique hydraulique ou électromagnétique.

9. Dispositif selon l'une quelconque des revendications 1 à 8,
caractérisé en ce que
l'installation d'empilage (7) et le moyen de guidage (23) de la bande transporteuse (18) sont reliés solidairement et sont réglables en commun.
